(19) Europäisches Patentamt / European Patent Office / Office européen des brevets

(11) **EP 4 201 545 A1**

(12) **EUROPEAN PATENT APPLICATION**

(43) Date of publication:
**28.06.2023 Bulletin 2023/26**

(21) Application number: **22216154.9**

(22) Date of filing: **22.12.2022**

(51) International Patent Classification (IPC):
**B21D 7/12** (2006.01)        **G05B 19/418** (2006.01)
**G05B 13/02** (2006.01)

(52) Cooperative Patent Classification (CPC):
**G05B 13/0265; B21D 7/12; G05B 19/41875;**
G05B 2219/36203; G05B 2219/45143

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 US 202163293512 P**

(71) Applicant: **ATS Corporation
Cambridge ON N3H 4R7 (CA)**

(72) Inventors:
- **SINNIGE, Nicolas John Reynolds
  Ontario, N2L 0J8 (CA)**
- **KHERADMANDI, Masoud
  Ontario, N2J 2L1 (CA)**
- **KLEINIKKINK, Stanley Wellington
  Ontario, N3H 4R7 (CA)**
- **TANAKA, Kevin
  Ontario, N3H 4R7 (CA)**

(74) Representative: **Fidal Innovation
4-6 avenue d'Alsace
92400 Courbevoie (FR)**

(54) **METHODS AND SYSTEMS FOR CONTROLLING COMPUTER NUMERICAL CONTROL MACHINES**

(57)    There is described a system and a computer-implemented method for controlling a part-processing device of a computer numerical control machine to bend cannulas. The method comprises the step of receiving one or more set parameters relating to one or more desired bend characteristics. The method also comprises the step of determining one or more uncontrolled inputs, the one or more uncontrolled inputs comprising bend parameters of a previously bent cannula. The method also comprises the step of inputting the one or more set parameters and the one or more uncontrolled inputs into a machine learning model to produce a plurality of outputs. The method also comprises the step of determining control parameters using the plurality of outputs, the control parameters relating to one or more settings of the part-processing device. The method also comprises the steps of setting the part-processing device using the control parameters and the uncontrolled inputs and bending a cannula using the part-processing device.

FIG.8

**EP 4 201 545 A1**

**Description**

FIELD

The present disclosure generally relates to manufacturing using computer numerical controlled (CNC) machines. In particular, the present disclosure relates to methods and systems for controlling numerical controlled machines using machine learning.

INTRODUCTION

Manufacturing of products includes the automated creation and testing of parts, and the assembly of a finished product from parts. In the following description the term "component" is chosen as a general term to describe individual parts, an assembly of parts, materials such as adhesives, weld consumables or plastic to be molded, and the final product of a manufacturing process.

WO2014078938A1 describes methods of manufacturing using computer numerically controlled drives to move and process components through various stages where the timing, position, orientation, linear or rotary velocity, and acceleration of the components and devices that deliver/receive components are matched. Computer numerical control of linear conveyors or drives, actuators, sensors and other devices is coordinated through programming known as "electronic camming".

Electronic camming coordinates the actuation of multiple mechanisms through electronic controls and software. The mechanisms need not physically interact, and synchronization of their motions is electronically controlled with extreme accuracy and flexibility through software interaction. Electronic camming links movements of devices through electronic means (i.e., software), conceptually in the same manner that gears, linkages, and timing chains link movements of mechanical devices together, with enhanced accuracy, control and design flexibility.

An application of electronic camming in the processing of single components or assembling of multiple components together is described in international publication WO2014078938A1 that can be summarized as follows. A first component is loaded, separated from an intake stream and accelerated. The component is delivered at a predetermined delivery time, delivery position, delivery speed and moving along a delivery trajectory to be delivered to and received by a processing tool that is also moving. The motions of the delivery device and the processing tool receiving of the component are electronically synchronized. The transfer of the component from one device to the other is coordinated and timed electronically. Through the processing or assembly process, the actuators that move the devices to handle the component are electronically cammed and synchronized together.

The same concept can be applied to each stage of a manufacturing process where separate devices have their motions coordinated through electronic camming and CNC program software. Manufacturing involves storage of material/components, motion control, and processing of material/components, for example: molding, forming, cutting, bonding, welding, stamping, dispensing, assembling, fastening; as well as inspecting, testing, measuring and rejecting failed material/components.

One example of such a stage is the manipulation and bending of metal cannulas. Cannulas are thin tubes than can be inserted into human or animal bodies, notably for the delivery or removal of fluid or for gathering samples. Well known cannula bending techniques include rotary draw bending, compression bending, ram bending and 3-roll bending. One of the disadvantages with known techniques of bending cannulas is that, at very small scales, bends can lead to defects such as wrinkling of the cannula material at or around the bend location, cracking of the cannula at or around the bend location and/or flattening of the cannula at or around the bend location. Each of these defects can have a significant effect on the flow rate of fluid through the cannula.

In the medical devices industry, these disadvantages are compounded by the requirements relating to the manufacturing of medical products and Current Good Manufacturing Practice (CGMP) regulations prohibiting machine interactions with the interior of the cannulas (such as by way of a mandrel), or the use of lubricants on the interior or exterior surfaces of the cannulas. Moreover, as medical devices and products continue to evolve, demand is growing for greater precision in cannula bending geometry, and for more complex geometries, characterized by, for example, tighter bends, compound bends and bends with variable radii.

Accordingly, there is a need for methods and systems of controlling electronically cammed CNC machines to bend cannula with greater control so as to allow better bending performance.

SUMMARY

The following summary is intended to introduce the reader to various aspects of the applicant's teaching, but not to define any invention.

The various embodiments described herein generally relate to controlling CNC machines using machine learning models.

In accordance with one aspect of the present disclosure, there is provided a computer-implemented method for controlling a part-processing device of a computer numerical control machine to bend cannulas. The method comprises the step of receiving one or more set parameters relating to one or more desired bend characteristics. The method also comprises the step of determining one or more uncontrolled inputs, the one or more uncontrolled inputs comprising bend parameters of a previously bent cannula. The method also comprises the step of inputting the one or more set parameters and the one or more uncontrolled inputs into a machine learning model to produce a plurality of outputs. The method also comprises the step of determining control parameters using the plurality of outputs. The control parameters relate to one or more settings of the part-processing device. The method also comprises the steps of setting the part-processing device using the control parameters and the uncontrolled inputs and bending a cannula using the part-processing device.

In some embodiments, the one or more uncontrolled inputs comprise one or more disturbance parameters relating to the cannula and/or to one or more part-processing components of the part-processing device.

In some embodiments, the method further comprises the step of determining one or more bend parameters of the cannula bent at the above bending step.

In some embodiments, the method further comprises the step of repeating the steps of receiving, determining one or more uncontrolled inputs, inputting, determining control parameters, setting and bending for each of a plurality of cannulas that are sequentially bent, and wherein for each of the sequentially bent cannulas, the previously bent cannula is a cannula that was bent immediately preceding the cannula that is bent in during the bending step.

In some embodiments, the method further comprises the step of inspecting each of the plurality of cannula that are bent during the bending step by comparing their determined one or more bend parameters to the one or more set parameters.

In some embodiments, the disturbance parameters includes one or more of temperature, humidity, external vibrations, cannula material, anisotropic variations, material defects/variations, cannula surface finish, inner diameter variations alone the length of the cannula, outer diameter variations along the length of the cannula, inner to outer diameter concentricity, variations in wall thickness along the length of the cannula, tooling inaccuracies/tolerances, debris on cannula and/or tooling, and tooling alignment.

In some embodiments, the bend parameters include one or more of bend radius, bend angle, bend position, bend orientation and flow rate.

In some embodiments, the set parameters include one or more of bend radius, bend angle, bend position, bend orientation and flow rate.

In some embodiments, the step of setting the part-processing device using the control parameters and the uncontrolled inputs includes setting one or more tooling components of the part-processing device.

In some embodiments, the control parameters include one or more of a die configuration, a shoe configuration, a clamp configuration, a clamp position, a tooling bend angle, a number of bending stages, a cannula position, a bending torque and a bending speed.

In accordance with another aspect of the present disclosure, there is provided a part-processing control system for controlling a part-processing device of a computer numerical control machine to bend cannulas. The part-processing control system comprises a processor and a non-transitory computer-readable medium storing instructions that, when executed by the processor cause the part-processing control system to carry out one or more of the above computer-implemented methods for controlling a part-processing device of a computer numerical control machine to bend cannulas.

DRAWINGS

The drawings included herewith are for illustrating various examples of apparatus, systems, and processes of the present specification and are not intended to limit the scope of what is taught in any way. In the drawings:

FIG. 1 is a schematic diagram of an example automated production station for mass producing and testing a plurality of different products;

FIG. 2 is a schematic diagram of an example part-processing device for the automated production station of FIG. 1;

FIG. 3 is another schematic diagram of an example part-processing device for the automated production station of FIG. 1;

FIG. 4 is a schematic diagram of an example cannula bending station that can be used in accordance with systems and methods of the present disclosure;

FIG. 5 is a schematic diagram of example workpiece transfer devices including validation stations;

FIGs. 6A to 6C are representations of various cannula that can be bent in accordance with systems and method of the present disclosure;

FIG. 7 is a schematic diagram of a cannula bent in accordance with system and methods of the present disclosure;

FIG. 8 is a control diagram carried out by the part-processing control system of FIG. 2 and FIG. 3; and

FIG. 9 is a flowchart of an example method in accordance with the present disclosure.

DESCRIPTION OF VARIOUS EMBODIMENTS

Various apparatus, systems, or processes will be described below to provide an example of an embodiment of each claimed invention. No embodiment described below limits any claimed invention and any claimed invention may cover apparatus, processes, or systems that differ from those described below. The claimed inventions are not limited to apparatus, systems, or processes having all of the features of any one apparatus, system, or process described below or to features common to multiple or all of the apparatus, systems, or processes described below. It is possible that an apparatus, system, or process described below is not an embodiment of any claimed invention. Any invention disclosed in an apparatus, system, or process described below that is not claimed in this document may be the subject matter of another protective instrument, for example, a continuing patent application, and the applicants, inventors, or owners do not intend to abandon, disclaim, or dedicate to the public any such invention by its disclosure in this document.

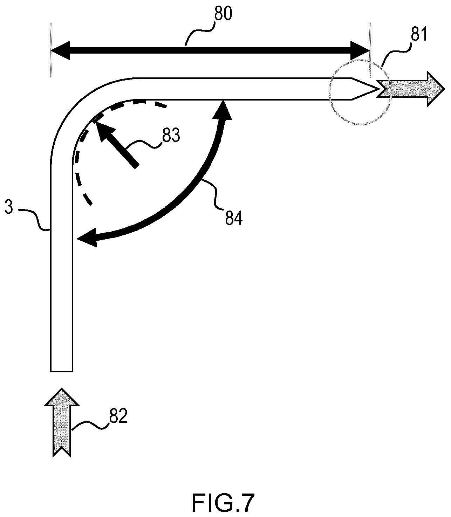

A production process can involve processing (e.g., transferring, transporting, handling, manipulating, assembling, testing, etc.) parts to produce a product. In some embodiments of the present disclosure, the processing involves bending cannula. During the production process, the part requiring further processing (for example, a subcomponent or partially finished product) can be referred to as a workpiece. The workpiece can be moved through a production station among various part-processing devices that perform the various operations on the workpiece(s) in production of the product. In some examples, such production processes can utilize a large number of standard, multi-purpose, re-configurable machines for performing specific operations on the workpiece(s) in production of the product, as will be described elsewhere herein with reference to FIG. 7. In some embodiments of the present disclosure, the workpieces are cannula and the operation is bending the cannula to various angles.

This description employs the terms "delivery device", "receiving device", and "completion device" merely to imply a progression of the workpiece or processing from delivery to receiving to completion. Alternative terms could be used such as first, second and third to imply the same progression.

To introduce different parts/workpieces and/or produce different products, addition of machines and/or separate processing lines may be required. In some examples, limited space in production facilities may preclude such expansion. Certain machines may also require manual reprogramming and retooling when switching between different parts and/or products for processing, which may contribute to production overhead and inefficiencies.

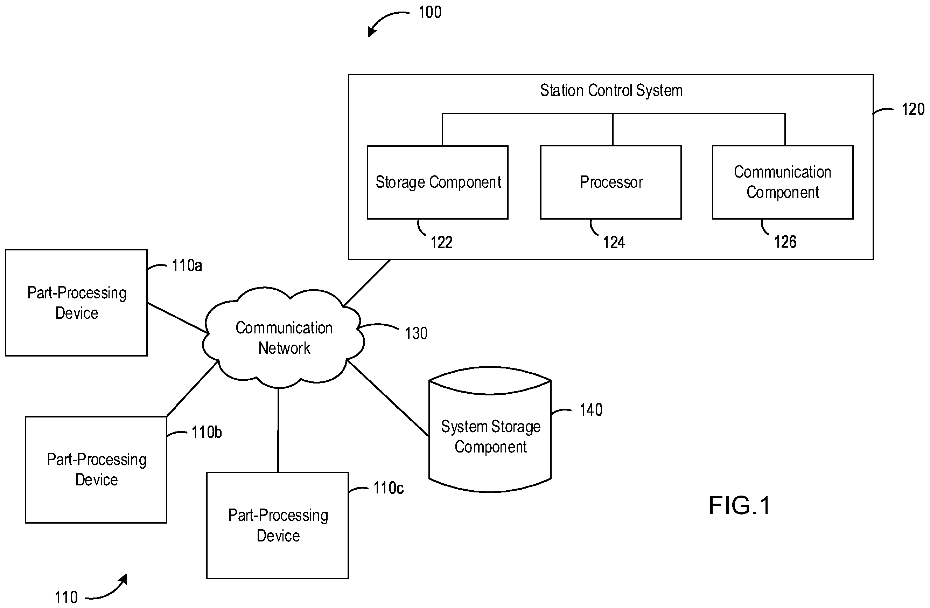

Referring to FIG. 1, an example automated production station 100 is shown for producing different products. The production station 100 can include one or more part-processing devices 110, a station control system 120, a communication network 130, and a system storage component 140. Although only three part-processing devices 110a, 110b, and 110c are shown in FIG. 1, the automated production station 100 may include fewer or more part-processing devices 110.

The station control system 120 can include control interfaces that allow a user to electronically configure the automated production station 100. The station control system 120 can select control parameters for the part-processing device 110 to perform coordinated operations. The control parameters can be determined by the station control system 120 or received at the station control system 120 as input data. As shown in FIG. 1, the station control system 120 includes a station storage component 122, a station processor 124, and a station communication component 126. As described in more detail elsewhere herein, the control parameters can be generated by one or more machine learning models in accordance with the system and methods disclosed herein.

The station storage component 122 can include RAM, ROM, one or more hard drives, one or more flash drives or some other suitable data storage elements such as disk drives. The station storage component 122 can include one or more databases for storing data related to the automated production station 100. The station storage component 122 can store data in respect of the operation of the automated production station 100, such as data in respect of the part-processing devices 110 and the coordinated operations being carried out by the part-processing devices 110.

For example, the station storage component 122 can store data received from the part-processing devices 110, data in respect of the coordinated operations delegated by the station control system 120, property data in respect of each of the part-processing devices 110, etc. The station storage component 122 can also store computer programs that are executable by the station processor 124 to facilitate communication between the station control system 120 and the part-processing devices 110, and configuration of the part-processing devices 110.

In some embodiments, the station storage component 122 can instead be the system storage component 140, which is accessible via the communication network 130.

In some embodiments, the station storage component 122 can store data that is more current based on the operation of the station control system 120, and the system storage component 140 can store data that is considered by the station control system 120 to unlikely be used in the immediate future. For example, the station storage component 122 can store operating data and part-processing property data only for the part-processing devices 110 operating during a certain production run or day, whereas the system storage component 140 can store the data for all part-processing devices 110, which is typically infrequently changed. In some embodiments, the system storage component 140 can be a third-party data storage.

The station processor 124 can control the operation of the station control system 120. The station processor 124 may be implemented using any suitable processors, controllers, digital signal processors, graphics processing units, application specific integrated circuits (ASICs), field programmable gate arrays (FPGAs), microcontrollers, and/or other suitably programmed or programmable logic circuits that can provide sufficient processing power depending on the configuration, purposes and requirements of the station control system 120. In some embodiments, the station processor 124 can include more than one processor with each processor being configured to perform different dedicated tasks. The station processor 124 together with the processor at the part-processing devices 110 contribute to the control of the automated production station 100.

The station communication component 126 can include any interface that enables the station control system 120 to communicate with various devices and other systems. For example, the station communication component 126 can facilitate communication with the other components of the automated production station 100, such as the part-processing devices 110 and the system storage component 140 via the communication network 130.

The station communication component 126 can include at least one of a serial port, a parallel port or a USB port, in some embodiments. The station communication component 126 may also include an interface to component via one or more of an Internet, Local Area Network (LAN), Ethernet, Firewire, modem, fiber, or digital subscriber line connection. Various combinations of these elements may be incorporated within the station communication component 126. For example, the station communication component 126 may receive input from various input devices, such as a mouse, a keyboard, a touch screen, a thumbwheel, a trackpad, a track-ball, a card-reader, voice recognition software and the like depending on the requirements and implementation of the station control system 120.

The communication network 130 can include any network capable of carrying data, including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these, capable of interfacing with, and enabling communication between the station control system 120, the part-processing devices 110, and the system storage component 140.

For example, each part-processing device 110 and the station control system 120 may be equipped with a wireless communication interface to enable wireless communications according to a Wi-Fi protocol (e.g., IEEE 802.11 protocol or similar).

Similar to the station storage component 122, the system storage component 140 can store information about the part-processing devices 110, including operating data, profile data (e.g., servo-motor profile data), motion data with which the part-processing devices 110 operate (e.g., tool motion data), data in respect of products that the automated production station can produce, data in respect of parts or workpieces that may be used to produce the products, and any of the training, operating and/or peripheral data required to implement the machine learning models described herein.

Profile data, motion data, product data, part data, and workpiece data can be stored in the system storage component 140 for subsequent retrieval by the part-processing devices 110. The part-processing devices 110 can download motion data, product data, part data, and workpiece data from the system storage component 140 via the communication network 130, for example.

Profile data and motion data can be generated for the part-processing devices 110. For example, tables representing the profile data and motion data of tools of the part-processing devices 110 can be imported and form the basis for the profile data and motion data, respectively. In another example, the station control system 120 can generate the motion data based on data collected by the part-processing device 110.

In some embodiments, operating data can be stored in the system storage component 140, and the operating data can be retrieved by the station control system 120 when needed. The station control system 120 can download the operating data from the system storage component 140 via the communication network 130. Example operating data can include, but is not limited to, a current position of one or more tooling of the part-processing device 110, a current speed of one or more tooling of the part-processing device 110, a current velocity of one or more tooling of the part-processing device 110, and a current acceleration of one or more tooling of the part-processing device 110. In some embodiments, the operating data, or at least some of the operating data, can be stored in the station storage component 122.

In some embodiments, one or more computing devices (not shown in FIG. 1) can communicate with the automated production station 100 via the communication network 130. A user may electronically configure the automated production station 100 using the computing device, as described in more detail elsewhere herein. The computing device can include any device capable of communication with other devices through a network such as communication network 130. The computing device can include a processor and memory, and may be an electronic tablet device, a personal computer, workstation, server, portable computer, mobile device, personal digital assistant, laptop, smart phone, WAP phone, an interactive television, video display terminals, gaming consoles, and portable electronic devices or any combination of these.

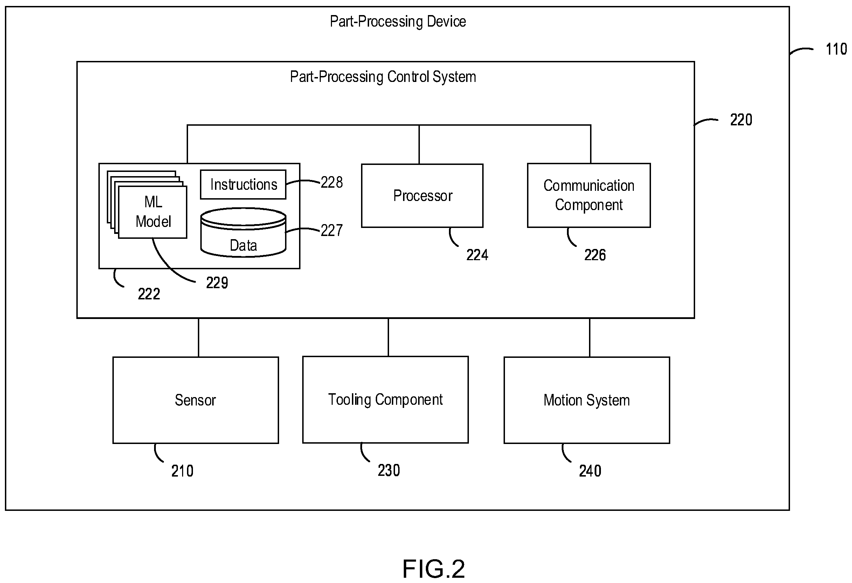

Reference is now made to FIG. 2, which shows a block diagram of an example part-processing device 110. The example part-processing device 110 can be part-processing devices 110a, 110b, 110c of the automated production station 100. The part-processing device 110 includes a part-processing control system 220, a sensor system 210, one or more tooling components 230, and a motion system 240.

The part-processing control system 220 can include a processor 224, a storage component (or memory) 222, and a communication component 226. The part-processing control system 220 can facilitate the operation of the part-processing device 110. The part-processing control system 220 can include control interfaces that allow a user to electronically configure the part-processing device 110. The part-processing control system 220 can collect and store motion data of the part-processing device 110 in the part-processing storage component 222.

The processor 224 can include any suitable processors, controllers, digital signal processors. microcontrollers, and/or other suitably programmed or programmable logic circuits that can provide sufficient processing power depending on the configuration, purposes and requirements of the part-processing device 110. In some embodiments, the processor 224 can include more than one processor with each processor being configured to perform different dedicated tasks.

The communication component 226 can include any component for facilitating communication with the station control system 120 via the communication network 130. For example, the communication component 226 can include a wireless transceiver for communicating within a wireless communications network.

The part-processing storage component 222 can store data to be used during the operation of the part-processing device 110 and/or to facilitate the operation of the part-processing device 110. Example data can include operating data in respect of its operation, and data in respect of parts, workpieces, or the product etc.

The part-processing storage component 222 can store software applications executable by the processor 224. For example, the software application can facilitate communication with the station control system 120 and/or operation of the part-processing device 110, including components thereof such as but not limited to tooling components 230, pneumatic actuators, servomotors, and others.

The part-processing storage component 222 can store machine learning models 229, along with data 227 and instructions 228 operable to execute the methods described herein, as detailed elsewhere herein. For example, instructions 228 may include, but are not limited to, drivers to convert outputs from the machine learning models 229 into electrical signals 58 suitable to move tooling components 230. Moreover, all inputs and outputs of the machine learning models 229 may be stored as data 227.

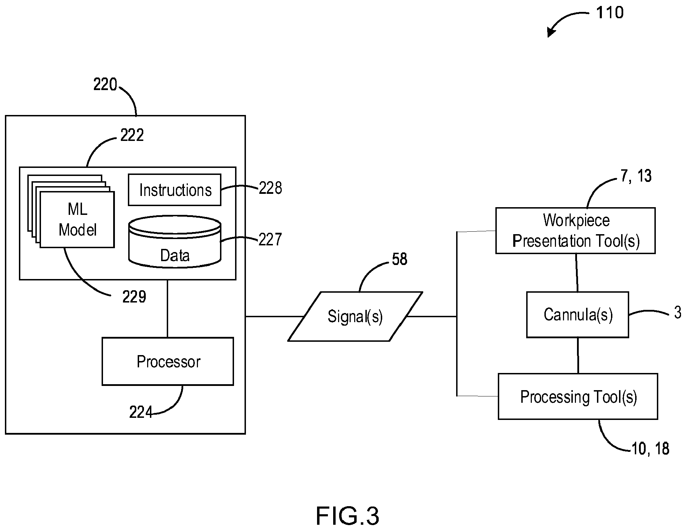

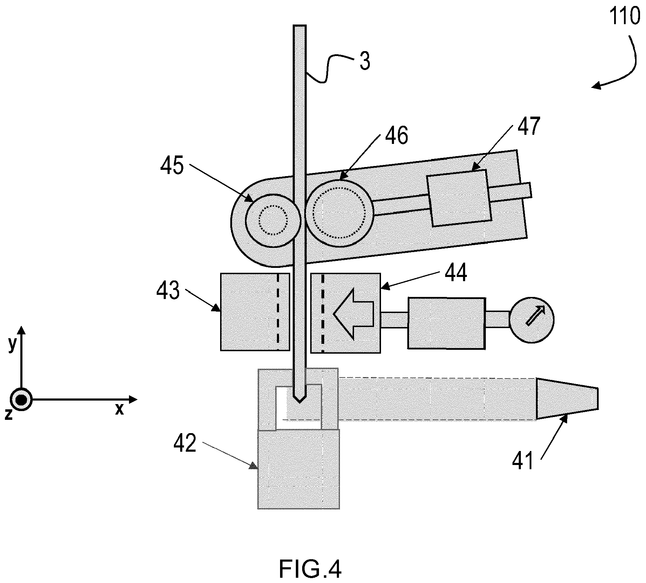

The part-processing device 110 can be equipped with one or more tooling components 230 for engaging with workpieces detected by the sensor system 210, as described in more detail with reference to FIG. 2. Tooling components 230 can be used to present a part or process a part. The operation of the tooling components 230 can be controlled by the part-processing control system 220 and with consideration of the data collected by the sensor system 210, as described in more detail with reference to FIG. 3 and FIG. 4.

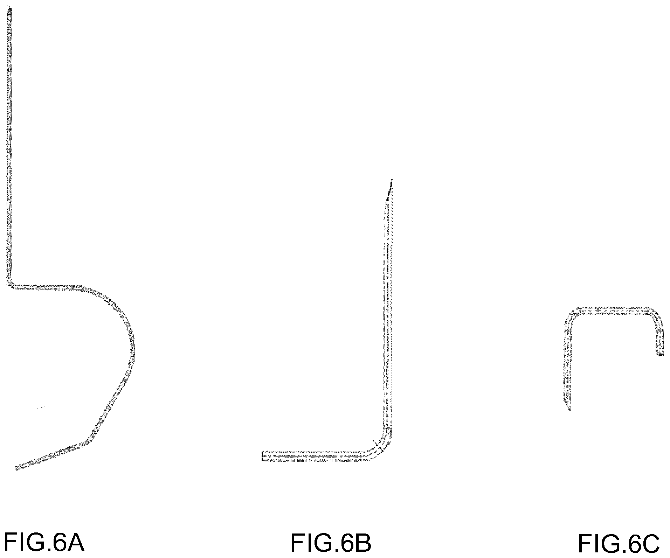

Now, with reference to FIG. 3 and FIG. 4, which show schematic diagrams of an example part-processing device 110 for the automated production station of FIG. 1. Part-processing device 110 can handle one or more cannula 3. As shown in FIG. 3, part-processing device 110 can include tooling components 230 such as one or more workpiece presentation tools 7, 13 and one or more processing tools 10, 18. FIGs. 6A to 6C shows a number of non-limiting examples of bent cannula that can be achieved used the methods and systems described herein. As will readily be appreciated by the skilled reader, the methods and systems of the present disclosure can be used to achieve other bends.

As shown in FIG. 3, workpiece presentation tools 7, 13 can, for example, be a part of one or more component delivery devices. In some embodiments, workpiece presentation tools 7,13 can include one or more screws for separating a lead cannula from an adjacent cannula. Accordingly, workpiece presentation tool 7, 13 can be configured to: load one or more cannula 3 at an intake position at a leading end of a stream of like cannulas 3; separate cannula 3 from the like cannulas 3; accelerate cannula 3; and deliver cannula 3 at a predetermined delivery time, delivery position, delivery speed and moving along a delivery trajectory. Workpiece presentation tool 7, 13 can be configured to deliver cannulas 3 before loading one or more subsequent cannulas 3 at the intake position. Processing tools 10, 18, 42, 43, 44, 45, 46 and 47 can, for example, be configured to bend cannula 3 in accordance with the method described herein.

FIG. 4 shows examples of various elements that can form part of a part-processing device 110, in accordance with various embodiments of the present disclosure. It will however be appreciated that not all elements shown in FIG. 4 need be used or be present in part-processing device 110. Moreover, other known part-processing and part-inspecting elements may also form part of part-processing device 110.

As show in FIG. 4, part-processing device 110 may comprise a tip camera 41, which is operable to determine the position and orientation of the tip of cannula 3 before and after bending. In some embodiments, tip camera 41 can be a standard camera. In other embodiments, tip camera 41 may be any other suitable optical device for determining the position and orientation of the tip of cannula 3. In yet other embodiments, other elements, such as cameras, can be used additionally or alternatively to determine the position and orientation of the cannula.

In some embodiments, part-processing device 110 may also comprise a gripper 42. Gripper 42 is operable to facilitate positioning and orientation of the cannula in the tooling relative to a datum or reference feature, such as the cannula tip, notch, or other visible mark. For example, gripper 42 may be operable to hold the end of the cannula. In some embodiments, gripper 42 may hold the datum end of cannula 3 to facilitate accurate positioning of the bend. Gripper 42 may also be operable to keep the cannula in a repeatable position for tip camera 41 and may operate in conjunction with clamp 44 and anvil 43 to secure cannula 3 in position. The position of the grippers 42 may be moved to accommodate for different sized cannulas, to change the location of where grippers 42 hold cannula 3 and/or to align the cannula with the rest of the tooling components. The grip force of grippers 42 is adjustable by part-processing control system 220.

In some embodiments, part-processing device 110 may also comprise anvil 43. For example, anvil 43 may include a piece of static tooling that is used in conjunction with clamp 44 to hold cannula 3 in place. Anvil 43 may comprise a grooved profile longitudinally disposed along the length of cannula 3 in order to better align cannula 3 to be tangential to die 45.

In some embodiments, part-processing device 110 may also comprise clamp 44. For example, clamp 44 may comprise adjustable tooling configured to hold cannula 3 in place by pressing it up against anvil 43 with an adjustable amount of force. The amount of force used by clamp 44 may be adjusted by way of the part-processing control system 220 in accordance with the present disclosure. The position of clamp 44 may also be adjusted to be closer or farther from die 45 and shoe 46.

In some embodiments, part-processing device 110 may also comprise die 45. For example, die 45 may comprise profiled tooling that is what shoe 46 forces cannula 3 around in order to achieve the bend. The profile of the die 45 can be modified to adjust how the cannula is supported and/or guided during the bending operation. While the radius of die 45 determines the radius of the bend, this relationship is not one-to-one. That is to say that the radius of die 45 does not typically equal the final bend radius of cannula 3. In some embodiments, die 45 may be fixed in place. In other embodiments, die 45 may be allowed to spin freely about its central axis (i.e., the center of the bend radius of die 45).

In some embodiments, part-processing device 110 may also comprise shoe 46. For example, shoe 46 may comprise profiled tooling operably to force and/or guide cannula 3 around the 45 to achieve the bend. The profile of shoe 46 can be modified to adjust how the cannula is supported and/or guided during the bending operation. Bending speed and the amount of torque used by the shoe can be controlled by the part-processing control system 220. The distance between die 45 and shoe 46 can also be modified. In some embodiments, shoe 46 may be fixed in place. In other embodiments, however, shoe 46 may be mobile on a linear servo motor axis. Shoe 46 can be rotationally fixed or be allowed to spin freely about its central axis.

In some embodiments, part-processing device 110 may also comprise a pneumatic system 47 including a regulator operable to set and adjust the force that grippers 42 and/or clamp/anvil hold cannula 3 with. In other embodiments, grippers 42 may operate by way of other system suitable for producing a gripping force, such as, but not limited to, servomotors.

The sensor system 210 can include one or more sensors for collecting data from the environment of the part-processing device 110. For example, the sensor system 210 can include a LiDAR device (or other optical/laser, sonar, radar range-finding such as time-of-flight sensors). The sensor system 210 can include optical sensors, such as video cameras and systems (e.g., stereo vision).

The sensor system 210 can detect workpieces within a detection range. Furthermore, the sensor system 210 can detect different properties of the workpieces and generate identification data for the workpieces. The term "workpiece" and "component" used herein refers to a part of a product or a partially finished product. Parts can have different geometric properties, such as but not limited to, different types, shapes, and sizes. The terms "different parts" and/or "different products" used herein refers to parts having such different properties and not merely a plurality of identical parts. In some embodiments, a part is a cannula.

In some embodiments, tip camera 41 of the example part-processing device 110 can form part of the sensor system 210. Tip camera 41 is a camera performing a visual inspection of the position and orientation of the tip of cannula 3. In some embodiments, tip camera 41 is operable to determine the exact location of the tip of cannula 3 when it is being held in place by gripper 42.

In some embodiments, grippers 42 and the clamp 44 include pressure sensors operable to directly measure pressure of their pneumatic systems. This direct measurement of pressure can be used to compare with the input pressure set by the part-processing control system 220. Sensors may also be included to measure the distance between the grippers 42 and between the clamp and anvil 43 to get approximate measurements of the outer diameter of cannula 3, for example. Position sensors may also be included in the grippers 42 and clamp 44 to indicate where along cannula 3 they are gripping. In some embodiments, a force sensor may be added to anvil 43 to directly measure clamping force.

The shaft of shoe 46 may include an encoder operable to measure bending speed, velocity and acceleration. The encoder can also be used to monitor for repeatable tooling motions. A dynamometer can be included in the axis rotating the shoe around the die to measure bending torque. A rotary encoder can also be included in this axis to measure the current bend angle (to close the control loop). A positional sensor (e.g., linear encoder) can be used to measure clearance between die 45 and the shoe 46. If die 45 and/or shoe 46 are free spinning, sensors may be used to monitor their movement.

In some embodiments, it may be required and/or desirable to determine when the bending process starts and stops. This can be achieved using a variety of known methods including, but not limited to, torque monitoring with a dynamometer, as described elsewhere herein, electrical/resistive/capacitive connections between the shoe 46 and the cannula 3 and/or vision monitoring of the free end of cannula 3 for start and end geometry.

Torque monitoring, either independently (using, for example, the dynamometer described in more detail elsewhere herein) or in conjunction with a complementary instrument such as an encoder or vision system, may be used to monitor for deviations in the applied bending moment or torsion. Methods such as signature analysis or bounding can also be used to indicate deviations in either the bending process or in the product. For example, an increase in torque or sudden reduction could indicate an anomaly, such as a defect in the cannula 3 being bent, or an unintended change in state to the tooling.

In some embodiments, before and during the bending process, a vision system may be used on each end of cannula 3, to datum, measure, and/or monitor the position of the bend relative to the end of cannula 3.

In some embodiments, before or during bending, an optical, laser, or contact measurement system may be used to determine the diameter of cannula 3.

In some embodiments, a camera can be used to measure the final bend angle, bend position, bend orientation and the outer diameter of cannula 3 at various points along the cannula. In some embodiments, flow rate or pressure drop through cannula 3 could be measured to verify cannula functionality and/or geometry.

In some embodiments, temperature sensors may be added to the part-processing device 110 to determine ambient temperature and the temperature of the tooling components themselves. In some embodiments other sensors and/or detectors may be used. For example, accelerometers on and around the tooling elements of part-processing device 110 may be used to measure machine vibrations. A camera may be used before bending to measure the length and straightness of cannula 3 as well as the outer diameter at various points along the length. Another camera may be used to look through cannula 3 to measure its inner diameter. Accelerometers and/or acoustic emissions sensors may be used to monitor vibrations, which may impact the performance of the part-processing device 110. The information generated by the measurements, encodings, determinations and sensed phenomena described herein can be used as inputs to the machine learning algorithms described herein.

In some embodiments, other manually entered information relating to a lot of cannulas 3 being bent could be used by the machine learning algorithms described herein. Such information may include, but is not limited to, lubricant properties, cannula lot identification information and cannula manufacturer information.

In some embodiments, the part-processing device 110 can receive control parameters from the station control system 120, a control interface, and/or an external system. Based on the control parameters, the part-processing control system 220 can operate the part-processing device 110 to process a workpiece detected by the sensor system 210, as described in more detail herein.

As shown in FIG. 2, in some embodiments, part-processing devices 110 can be equipped with a motion system 240 for facilitating motion of the part-processing devices 110 or components thereof, such as sensors 210 or tooling components 230. The motion system 240 can include one or more pneumatic actuators and/or servomotors.

FIG. 4 shows a coordinate system in which the x-axis extends left/right of the page, the y-axis extends up/down the page, and the z-axis extends in/out of the page. With reference to these coordinates, operation of the part-processing device 110 of FIG. 4 will now be described in more detail.

In some embodiments, before a bending operation, tip camera 41 is triggered and a vision inspection program measures the position and orientation of the tip of cannula 3. Gripper 42 opens and closes with an amount of force determined at least on part by part-processing control system 220 to secure the cannula in the tooling. In some embodiments, gripper 42 may be pneumatic with a regulator to be able to adjust grip force, under control of part-processing control system 220. The gripper 42 can move relative to the rest of the tooling components in the x-y plane and in the z-axis and rotate about its y-axis. In some embodiments, the gripper 42 motion (linear motion in x, y, and z, and rotation about the y-axis) may be automated to be able to create multiple bends in multiple positions and orientations on the same cannula 3. The rotation may be accomplished by servo motor, pneumatic, cam or linkage driven, or other motion drivers. In some embodiments, the linear x and y movements are accomplished by a servo slide motor or other suitable system that allows for precise position control. In some embodiments, the gripper 42 movement in the z-axis is provided to physically clear the rest of the tooling components when repositioning the cannula 3 between multiple bends. In some embodiments, motion along the z-axis may be provided by servo motor. In other embodiments however, motion along the z-axis may be provided by a simple pneumatic actuator moving between engaged and cleared positions.

Clamp 44 may move along the x-axis to secure the cannula against the anvil 43 under control of part-processing control system 220. In some embodiments, this can be provided by a pneumatic actuator with a regulator to control clamping force. In other embodiments, this can be provided by any other suitable device capable of providing sufficient force to hold cannula 3 in place (e.g., vacuum, electromagnets, etc.). Clamp 44 may also move in the y-axis to adjust the clamping position. In some embodiments, this can be achieved by adjusting a series of screws that adjust the position of clamp 44 along the rod acting as its pivot. In other embodiments, this may be achieved using a servo slide motor.

Shoe 46 is operable to rotate around the central axis of die 45 under control of part-processing control system 220. Rotation of the shoe 46 can be provided by any suitable device including, but not limited to, servo motors, pneumatics, cam or linkage driven systems or any other suitable motion driver. Shoe 46 can also be moved closer to and/or farther from die 45 in order to adjust clearance. This motion can be provided by servo motors, pneumatics and/or any other suitable device. In some embodiments, after the bending operation, the tip camera 41 is triggered again and the final position and orientation of the tip of cannula 3 are recorded to see if and by how much cannula 3 has slipped during the bending operation.

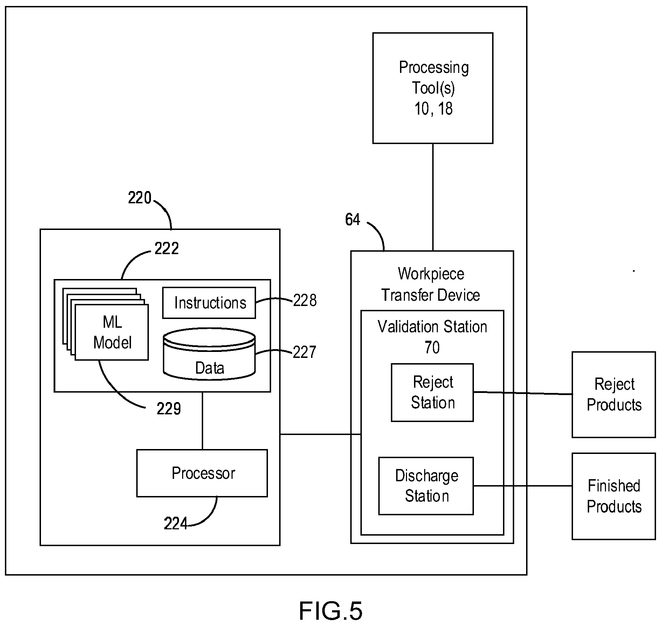

As shown in FIGs. 2 and 5, part-processing device 110 can also include a part-processing control system 220. As described above, part-processing control system 220 may include one or more processors 224 and related accessories that enable control of at least some aspects of performance of workpiece presentation tool 7, 13 and/or processing tools 10, 18, 42, 43, 44, 45, 46 and 47. Processor 224 may, for example, be configured to make decisions regarding the control and operation of part-processing device 110 and cause one or more of the aforementioned actions/motions to be carried out based on machine-readable instructions 228 including those stored within part-processing control system 220 and/or other machine-readable instructions received at part-processing control system 220 via wired and/or wireless communication.

Part-processing control system 220 can also include storage component 222, such as memory(ies), memory data devices or register(s). Storage component 222 can include any storage means (e.g., devices) suitable for retrievably storing machine-readable instructions 228 executable by processor 224 of part-processing control system 220 and other data 227. Storage component 222 can also comprise one or more machine learning models 229. The one or more machine learning models 229 can be configured to alter the instructions 228 used by the processor 224 to control and operate the part-processing device 110, and in particular processing tools 10, 18, 42, 43, 44, 45, 46 and 47.

Storage component 222 can be non-volatile and can include erasable programmable read only memory (EPROM), flash memory, and/or other electromagnetic media suitable for storing electronic data signals in volatile or non-volatile, non-transient form. Storage component 222 can contain machine-readable instructions for execution by processor 224 and also other data related to the operation of workpiece presentation tool 7, 13 and/or processing tool 10, 18. For example, storage component 222 can hold feedback data representative of feedback signals received from one or more sensors (e.g., encoders) associated with workpiece presentation tool 7, 13 and/or processing tools 10, 18, 42, 43, 44, 45, 46 and 47.

Machine-readable instructions stored in storage component 222 can cause part-processing control system 220 to generate one or more signals 58 (e.g., output data) useful in the operation of the part-processing device 110. Such machine-readable instructions 228 can be incorporated into one or more computer program products which can be stored on suitable medium or media. In some embodiments, the machine-readable instructions 228 can be executable by processor 224 and configured to cause processor 224 to generate signals 58 useful in the synchronization of two or more operations carried out by workpiece presentation tool 7, 13 and/or processing tools 10, 18, 10, 18, 42, 43, 44, 45, 46 and 47. That is, the machine-readable instructions can be executable by processor 224 can cause the processor 224 to select control parameters for the operation of workpiece presentation tool 7, 13 and/or processing tool 10, 18, 10, 18, 42, 43, 44, 45, 46 and 47 and generate signals 58 representative of the control parameters. For example, the machine-readable instructions can be configured to cause processor 224 to generate signals 58 useful in the synchronization of the delivery of cannula 3 by workpiece presentation tool 7, 13 and the receipt of cannula 3 by component processing tools 10, 18, 42, 43, 44, 45, 46 and 47.

The synchronization of two or more operations of workpiece presentation tool 7, 13 and processing tools 10, 18, 42, 43, 44, 45, 46 and 47 can effectively include electronic camming and/or electronic gearing instead of mechanical cams and/or gears used in some existing applications. In various embodiments, the use of such electronic synchronization can provide more flexibility and improved performance of part-processing device 110 in comparison with conventional systems comprising mechanical synchronization means. Accordingly, in various embodiments, storage component 222 can hold data representative of one or more cam profiles to be used in the operation of workpiece presentation tool 7, 13 and processing tool 10, 18, 42, 43, 44, 45, 46 and 47.

Accordingly, in various embodiments, the machine-readable instructions 228 can be configured to cause processor 224 to generate signals 58 useful in causing electronic camming of the delivery of cannula 3 by workpiece presentation tool 7, 13 and of the receipt of cannula 3 by processing tools 10, 18, 42, 43, 44, 45, 46 and 47. In some embodiments, the machine-readable instructions can be configured to cause processor 224 to generate signals 58 useful in causing electronic camming of the loading, separation, acceleration and delivery of cannula 3 by workpiece presentation tool 7, 13, and, of the receipt of cannula 3 by processing tools 10, 18, 42, 43, 44, 45, 46 and 47.

In various embodiments, the machine-readable instructions 228 can be configured to cause processor 224 to generate signals 58 useful in controlling at least some aspect of the bending of cannula 3. Such signals can be considered control parameters. As explained above, part-processing device 110 can include one or more servo-motors associated with workpiece presentation tool 7, 13 and one or more servo-motors associated with processing tool 10, 18. Accordingly, the machine-readable instructions can be configured to cause processor 224 to generate signals useful in controlling the one or more servo-motors associated with workpiece presentation tool 7,13 and the one or more servo-motors associated with processing tool 10, 18 according to a predetermined cam profile. In particular, processor 224 may set control parameters of processing tools 10, 18, 42, 43, 44, 45, 46 and 47.

As mentioned elsewhere herein, one or more machine learning models 229 can be configured to alter the instructions 228 used by the processor 224 to control and operate the part-processing device 110, and in particular processing tools 10, 18, 42, 43, 44, 45, 46 and 47. In particular, the machine learning models can alter instructions 228 to cause part-processing device 110 to modify one or more of the following parameters, as described in more detail in examples contained elsewhere herein.

In some embodiments, instructions 228 can control the die-shoe clearance of part-processing device 110 by setting the position of the shoe 46 along the axis described elsewhere herein with reference to FIG. 4. The die-shoe clearance is the distance between the die 45 and the shoe 46.

In some embodiments, instructions 228 can control the clamping force of part-processing device 110. The clamping force is the force used by clamp 44 to press cannula 3 up against anvil 43 in order to hold it in place during bending.

In some embodiments, instructions 228 can control the clamping position of part-processing device 110. The clamping position is the distance between clamp 44 and die 46.

In some embodiments, instructions 228 can control the bend angle of part-processing device 110. The bend angle is how far shoe 46 of part-processing device 110 bends cannula 3 to. Because of the elastic deformation of the cannula 3 (i.e., known as "springback") the angle reached by the tooling will be different to the final bend angle of cannula 3.

In some embodiments, instructions 228 can control the bend speed of part-processing device 110. The bend speed relates to how quickly the shoe 46 rotates around the die 45. In some embodiments, the bend speed profile may comprise a variable speed over time, as opposed to a constant through the bend procedure.

In some embodiments, instructions 228 can control the applied torque of part-processing device 110. The applied torque relates to how much torque is used to bend the cannula and can have an affect on the bend speed.

In some embodiments, the machine learning models 229 can also have as inputs tooling component parameters that can be measured, detected or otherwise characterized, as described elsewhere herein and relate to the tooling components.

In one example of a tooling component parameter, the machine learning models 229 can also have as an input the bend radius of die 45 that cannula 3 is bent around.

In one example of a tooling component parameter, the machine learning models 229 can also have as inputs the profiles of the die 45 and shoe 46 (i.e., the shapes of the contact surfaces on the die 451 shoe 46 that support cannula 3 during bending). Non-limiting examples of profiles include U-shaped profiles, V-shaped profiles and flat profiles.

In one example of a tooling component parameter, the machine learning models 229 can also have as an input position of cannula 3. The position of cannula 3 may be the distance of cannula 3 from various tooling elements. In some embodiments, the position of cannula 3 can be measured by the position and orientation of the tip of cannula 3 before bending and after clamp 44 and gripper 42 have been closed.

In one example of a tooling component parameter, the machine learning models 229 can also have as an input information indicating whether die 45 is fixed about its central axis or if it is free to rotate, as well as information in relation to the orientation of die 45.

In some embodiments, the machine learning models 229 can also have as inputs cannula parameters that can be measured, detected or otherwise characterized, as described elsewhere herein, and relate to the cannula that is to be bent.

In one example of a cannula parameter, the machine learning models 229 can also have as an input the inner and/or outer diameters of cannula 3.

In one example of a cannula parameter, the machine learning models 229 can also have as an input the deviation of the central axis of the cannula to a theoretical true central axis (e.g., an indication of the straightness of the cannula).

In one example of a cannula parameter, the machine learning models 229 can also have as an input the length of the cannula (e.g., the distance from the tip of the cannula to its end).

In one example of a cannula parameter, the machine learning models 229 can also have as an input cannula lot information including, but not to a manufacturing lot number.

In one example of a cannula parameter, the machine learning models 229 can also have as an input cannula manufacture information including, but not limited to, the name of the manufacturer of the cannula.

In one example of a cannula parameter, the machine learning models 229 can also have as an input current bend angle (e.g., the bend angle of the cannula measured during the bending process).

In one example of a cannula parameter, the machine learning models 229 can also have as an input lubricant information including, but not limited to, the name, manufacturer, type, viscosity, age (time since last changed), and other key information about the lubricant being used on the tooling components of part-processing device 110.

As is described in more detail elsewhere herein, the machine learning models 229 are able to use the aforementioned inputs and solve the non-linear relationships therebetween.

Reference is now made to FIG. 5, which shows a schematic diagram of example workpiece transfer devices 64 including validation station 70. Reference is also made to FIG. 7, which shows a bent cannula 3, as well as example bend parameters, including bend radius 83, bend angle 84, bend position 80, bend orientation 81 and flow rate 82.

As used herein, the term "bend radius" generally refers to the inner radius of the final bent cannula. Currently both the inner radius (shown as 83 in FIG. 7) as well as the outer radius are measured. The bend radius can be measured by way of a vision system using an overhead camera. For example, cannula 3 can be placed in front of a flat, backlight surface in front of vision system.

As used herein, the term "bend angle" generally refers to the angle between the tip and end of the cannula. The bend angle can be measured by way of a vision system using an overhead camera. For example, cannula 3 can be placed in front of a flat, backlight surface in front of vision system.

As used herein, the term "bend position" generally refers to the location of the bend along the length of cannula 3, and specifically to the position of the center of the bend radius relative to the tip of cannula 3.

As used herein, the term "bend orientation" generally refers to the radial position of the bend about a central axis, and specifically to the orientation of the center of the bend radius relative to the tip of cannula 3.

As used herein, the term "flow rate" generally refers to the amount of fluid or air that flows through a cannula at a set pressure. In some embodiments, the flow rate can be measured by seeing the rate of air flow at a given air pressure.

Validation station 70 can be located at one or more feeders 60, workpiece presentation tools 7, 13, workpiece transfer devices 64 and/or processing tools 10, 18. Validation stations 70 can receive information from part processing devices 110 in order to process cannula 3 which have failed a validation test. At these points, such cannulas 3 can be eliminated from system as scrap if they do not meet one or more bend parameters. In some embodiments, validation station 70 can test the bend radius 83, bend angle 84, bend position 80, bend orientation 81 and flow rate 82 of each cannula 3. Each of these measurements can also be used as inputs to the machine learning models 229, as described in more detail elsewhere herein.

In some embodiments, the systems and methods of the present disclosure may also measure disturbance parameters in the processing of cannula 3 by processing tools 10, 18, 42, 43, 44, 45, 46 and 47. Such disturbance parameters include, but are not limited to, temperature, humidity, external vibrations, applied torque, bending speed, cannula material, anisotropic variations, material defects/variations, cannula surface finish, inner diameter variations alone the length of the cannula, outer diameter variations along the length of the cannula, inner to outer diameter concentricity, variations in wall thickness along the length of the cannula, tooling inaccuracies/tolerances, debris on cannula and/or tooling, and tooling alignment. Temperature may be measured using infrared measurements and/or thermocouples. Humidity may be measured using impedance and/or mechanical hydrometers and/or psychrometers. External vibrations may be measured using accelerometers or acoustic sensors placed at various locations on the tooling components. Applied torque may be measured using a dynamometer or encoder on the shaft connected to shoe 46 and/or using a vision system. Bending speed may be measured using an encoder on the shaft connected to shoe 46 and/or using a vision system. The cannula material can be detected by way of a harness test (e.g., Rockwell, Vickers, or Brinell), a spark test and/or examination under a microscope. In some embodiments, the cannula material may be determined during bending, by classifying the torque, velocity and deformation signatures, as measured by, for example, a vision system.

Some anisotropic variations may also be detected by microscopic examination for grain variations and/or defects. In some embodiments, anisotropic variations may also of instead be detected by way of determining deviations from known torque, velocity and deformation signatures, as measured by, for example, a vision system. Some material defects may also be detected by microscopic examination for grain variations and/or defects. In some embodiments, material defects may also or instead be detected by way of determining deviations from known torque, velocity and deformation signatures, as measured by, for example, a vision system.

Information relating to the cannula surface finish may also be determined by way of a high zoom and/or high-resolution camera. Variations in the inner diameter along the length of cannula 3 may be determined by way of an endoscope and/or by way of flow or pressure drop tests. Variations in the outer diameter along the length of cannula 3 may be determined by way of taking side angle images as the cannula 3 while it is being rotated. Before and/or during bending, an optical, laser, or contact measurement system may be used to determine the diameter of the cannula. Inner and outer diameter concentricity may be determined by way of a camera looking down the central axis of cannula 3. Variations in wall thickness along the length of the cannula may be determined by combining the determinations of the variations in the inner diameter along the length of cannula 3 and the variations in the outer diameter along the length of cannula 3.

Tooling component inaccuracies and/or tolerances may be determined by way of a coordinate measuring machine, or other suitable high-resolution measurement systems (e.g., vision or laser) operable to measure some or all tooling components. Debris present on cannula 3 or tooling components can be detected by way of coordinate measuring machines, or other suitable high-resolution measurement systems (e.g., vision or laser) operable to measure some or all tooling components. Detection and/or measurement information in relation to the above disturbance parameters may also be used as inputs to the machine learning models 229, as described in more detail elsewhere herein.

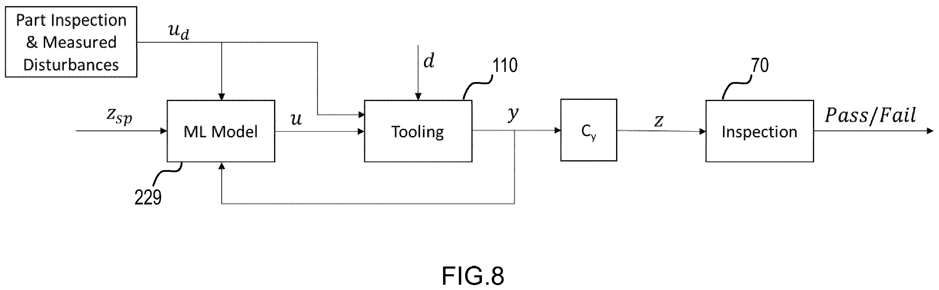

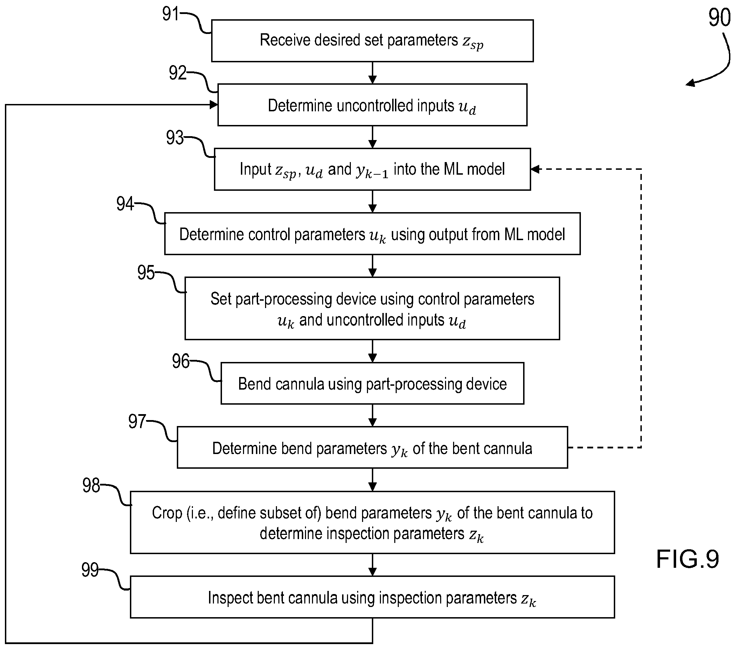

In some embodiments, the machine learning models described with reference to the control diagram shown in FIG. 8 and the method shown in FIG. 9 can have the following variables:

$$y_k = F(u_k, u_d, d_k, x_0)$$

$$z_k = C_y y_k$$

Where the $y_k$ is the vector of outputs (bend parameters) for the kth part, $u_k$ is the vector of inputs to the tooling component 230 (control parameters), $u_d$ is the vector of measured but uncontrolled inputs to the bending process, including cannula parameters and measured disturbance parameters, as described elsewhere herein, $d_k$ is the vector of unmeasured disturbances, $x_0$ is the initial state of the model which is an indication of material and physical properties of a lot of cannulas which are to be bent using processing tools 10, 18, 42, 43, 44, 45, 46 and 47, $z_k$ are inspection parameters and are a cropped subset of $y_k$ and are controlled variables of the process. As will be appreciated by the skilled reader disturbances $d_k$ are disturbances over which the systems and methods described herein have no control. As such, the systems and methods described herein can be used to mitigate the deleterious effects of disturbances $d_k$ on the bending cannulas 3.

In a non-limiting example, vectors $y_k$, $u_k$, $d_k$ and $u_d$ may comprise the following exemplary parameters:

$$y_k: \begin{bmatrix} Bend\ Radius \\ Bend\ Angle \\ Bend\ Position \\ Bend\ Orientation \\ Flow\ Rate \\ Bending\ Torque \end{bmatrix}$$

$$u_k: \begin{bmatrix} Die\ Configuration \\ Shoe\ Configuration \\ Clamp\ Position \\ Tooling\ Bend\ Angle \\ Number\ of\ Bending\ Stages \\ Cannula\ Position \\ Bending\ Speed \end{bmatrix}$$

$$d_k: \begin{bmatrix} Cannula\ Imperfections \\ Machine\ Vibrations \\ Debris \\ Tooling\ Misalignment \end{bmatrix}$$

$$u_d : \begin{bmatrix} Cannula\ Outer\ Diameter \\ Cannula\ Inner\ Diameter \\ Cannula\ Straightness \\ Cannula\ Length \\ Temperature \\ Lubricant\ Properties \end{bmatrix}$$

The skilled reader will understand that various methods can be used to train a machine learning model to carry out the methods and implement the systems described herein. For example, in some embodiments, the following model can be trained:

$$u_k = f\left(z_{sp}, Y_k, U_k, D_k\right)$$

Where, $z_{sp}$ are the desired set parameters of the bend, Y, U and D, are defined as:

$$Y_k : \begin{bmatrix} y_{k-1} \\ y_{k-2} \\ \vdots \\ y_{k-h} \end{bmatrix} \quad U_k : \begin{bmatrix} U_{k-1} \\ U_{k-2} \\ \vdots \\ U_{k-h} \end{bmatrix} \quad D_k : \begin{bmatrix} D_{k-1} \\ D_{k-2} \\ \vdots \\ D_{k-h} \end{bmatrix}$$

As such, control parameters, bend parameters and disturbance parameters of previously bent cannula can be used to predict the required manipulation parameters to arrive at a desired set of test parameters. While these models are simple and straightforward, they may not lead to optimal and/or feasible solutions.

In other embodiments, a model of the system can first be trained, then the best control parameter values can be calculated based on the model and system constraints. Such a model can have the following format:

$$y_k = f(U_k, D_k, Y_{k-1})$$

$$z_k = C_y y_k$$

The input can then be calculated by solving:

$$u_k = \underset{u_k}{arg\min} |y_k - y_{desired}|$$

subject to:

$$y_k = f(U_k, D_k, Y_{k-1})$$

$$Lower\ bound \le u_k \le Upper\ bound$$

While these models provide optimal and feasible solutions and can handle plant-model mismatch, they do require more computational power and complexity.

In other embodiments, a suitable regression model in a Markov Decision Process (MDP) can be used. Such a process learns the best manipulating variable to reach a desired output. To this end, a reward function can be defined, and control action is taken to maximize the reward function. The reward function is chosen in a way to have the maximum value at the desired setpoint.

$$u_k = \operatorname*{argmax}_{u_k} \sum_{i=0}^{h} \gamma^i R(u_{k+i}, x_{k+i}, x_{k+i+1}, y_{k+i})$$

subject to:

$$y_k = f(U_k, D_k, Y_{k-1})$$

$$Lower\ bound \leq u_k \leq Upper\ bound$$

Where y is the discount factor and R is the reward function for state. This optimization problem is solved after each part to calculate input for next part. These models are the most complex and rely on the highest computational load but are able to learn significant changes in the process and adopt to new conditions such as material variations.

FIG. 9 is a flow chart of a method 90 in accordance with some embodiments of the present disclosure. At step 91, desired set parameters $z_{sp}$ are received by the part-processing control system 220. The set parameters $z_{sp}$ are the desired values for the bend parameters resulting from the cannula 3 being bent by the processing tools 10, 18, 42, 43, 44, 45, 46 and 47, the desired values of for the bend parameters being related to desired bend characteristics. As shown in FIG. 7, the bend parameters may include bend radius 83, bend angle 84, bend position 80, bend orientation 81 and flow rate 82. As will be appreciated by the skilled reader, set parameters $z_{sp}$ can be defined by a user or received by part-processing control system 220 in any other suitable way.

At step 92, an incoming cannula 3 is inspected, as described elsewhere herein, to determine a number of cannula parameters. Examples of cannula parameters described elsewhere herein include, but are not limited to, inner diameter, outer diameter, straightness and length. At step 92, disturbance parameters are also measured. Examples of disturbance parameters associated with the tooling components 230 include, but are not limited to, tooling component temperature and the lubricant properties of the lubricant used on the tooling components 230. Other disturbance parameters are described in more detail elsewhere herein. The vector of cannula parameters and measured disturbance parameters, referred to herein as measured but uncontrolled inputs to the bending process, are shown in FIG. 8 as $u_d$.

As step 93, the set parameters $z_{sp}$, the bend parameters $y_k$ of the previous cannula 3, and the measured but uncontrolled inputs $u_d$ are input into the machine learning model 229 in accordance with one of the methods set out above. The output of the machine learning model 229 is then used to determine control parameters $u_k$ at step 94. Once the control parameters $u_k$ are determined, at step 95, the processing tools 10, 18, 42, 43, 44, 45, 46 and 47 are adjusted using the determined control parameters $u_k$ and the measured but uncontrolled inputs $u_d$, as shown in FIG. 8.

At step 96, the adjusted processing tools 10, 18, 42, 43, 44, 45, 46 and 47 bend cannula 3. At step 97, the bend parameters $y_k$ of the bent cannula are determined, as described in more detail elsewhere herein. Bend parameters $y_k$ can then be used as an input to the machine learning model 229 to determine control parameters $u_k$ for the next cannula that is to be bent. Then, at step 98, the bend parameters $y_k$ are cropped using operator $C_y$ in order to select the subset of the bend parameters that will be used by the validation station 70 to inspect the bent cannula. The subset of bend parameters used for inspection is referred to herein as inspection parameters $z_k$. An example of inspection parameters $z_k$ suitable for cannulas serving a specific function in eventual use include, bend radius 83, bend angle 84, but not bend position 80, bend orientation 81 or flow rate 82. Another example of inspection parameters $z_k$ suitable for cannulas serving a specific function in eventual use include bend orientation 81 and flow rate 82 only.

At step 99, the validation station 70 uses the inspection parameters $z_k$ to determine whether a cannula 3 failed a validation test. If the validation test is failed, the cannula can be eliminated from system 400, 500 as scrap. If, on the other hand, the validation test is passed, the cannula can be moved along the production line for further processing. Then, as shown in FIG. 9, the aforementioned method steps can be repeated for the next cannula that is to be bent, starting at step 92.

Various embodiments have been described herein by way of example only. Various modification and variations may be made to these example embodiments without departing from the scope of the appended claims.

A person of skill in the art will readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within the scope of the appended claims. Furthermore, all examples recited herein are principally intended expressly to be only for pedagogical purposes to aid the reader in understanding the principles of the invention and the concepts contributed by the inventors to furthering the art and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A computer-implemented method for controlling a part-processing device of a computer numerical control machine to bend cannulas, the method comprising the steps of:

   a) receiving one or more set parameters relating to one or more desired bend characteristics;
   b) determining one or more uncontrolled inputs, the one or more uncontrolled inputs comprising bend parameters of a previously bent cannula;
   c) inputting the one or more set parameters and the one or more uncontrolled inputs into a machine learning model to produce a plurality of outputs;
   d) determining control parameters using the plurality of outputs, the control parameters relating to one or more settings of the part-processing device;
   e) setting the part-processing device using the control parameters and the uncontrolled inputs; and
   f) bending a cannula using the part-processing device.

2. The computer-implemented method of claim 1, wherein the one or more uncontrolled inputs comprise one or more disturbance parameters relating to the cannula and/or to one or more part-processing components of the part-processing device.

3. The computer-implemented method of any one of claims 1 or 2, further comprising the step of:
   g) determining one or more bend parameters of the cannula bent at step f).

4. The computer-implemented method of claim 3, further comprising the step of:
   h) repeating steps b) to g) for each of a plurality of cannulas that are sequentially bent, and wherein for each of the sequentially bent cannulas, the previously bent cannula is a cannula that was bent immediately preceding the cannula that is bent in step f).

5. The computer-implemented method of claim 4, wherein the method further comprises the step of:
   i) inspecting each of the plurality of cannula that are bent at step f) by comparing their determined one or more bend parameters to the one or more set parameters.

6. The computer-implemented method of any one of claims 2 to 5, wherein the disturbance parameters includes one or more of temperature, humidity, external vibrations, cannula material, anisotropic variations, material defects/variations, cannula surface finish, inner diameter variations alone the length of the cannula, outer diameter variations along the length of the cannula, inner to outer diameter concentricity, variations in wall thickness along the length of the cannula, tooling inaccuracies/tolerances, debris on cannula and/or tooling, and tooling alignment.

7. The computer-implemented method of any one of claims 1 to 6, wherein the bend parameters include one or more of bend radius, bend angle, bend position, bend orientation and flow rate.

8. The computer-implemented method of any one of claims 1 to 7, wherein the set parameters include one or more of bend radius, bend angle, bend position, bend orientation and flow rate.

9. The computer-implemented method of any one of claims 1 to 8, wherein the control parameters include one or more of a die configuration, a shoe configuration, a clamp configuration, a clamp position, a tooling bend angle, a number of bending stages, a cannula position and a bending speed.

10. A part-processing control system for controlling a part-processing device of a computer numerical control machine to bend cannulas, the part-processing control system comprising:
a processor and a non-transitory computer-readable medium storing instructions that, when executed by the processor cause the part-processing control system to:

   a) receive one or more set parameters relating to one or more desired bend characteristics;
   b) determine one or more uncontrolled inputs, the one or more uncontrolled inputs comprising bend parameters of a previously bent cannula;
   c) input the one or more set parameters and the one or more uncontrolled inputs into a machine learning model to produce a plurality of outputs;
   d) determine control parameters using the plurality of outputs, the control parameters relating to one or more settings of the part-processing device;
   e) set the part-processing device using the control parameters and the uncontrolled inputs; and
   f) bend a cannula using the part-processing device.

11. The system of claim 10, wherein the one or more uncontrolled inputs comprise one or more disturbance parameters relating to the cannula and/or to one or more part-processing components of the part-processing device.

12. The system of any one of claims 10 or 11, wherein the part-processing control system is further caused to:
g) determine one or more bend parameters of the cannula bent at step f).

13. The system of claim 12, wherein the part-processing control system is further caused to:
h) repeat steps b) to g) for each of a plurality of cannulas that are sequentially bent, and wherein for each of the sequentially bent cannulas, the previously bent cannula is a cannula that was bent immediately preceding the cannula that is bent in step f).

14. The system of claim 13, wherein the part-processing control system is further caused to:
i) inspect each of the plurality of cannula that are bent at step f) by comparing their determined one or more bend parameters to the one or more set parameters.

15. The system of any one of claims 11 to 14, wherein the disturbance parameters includes one or more of temperature, humidity, external vibrations, applied torque, bending speed, cannula material, anisotropic variations, material defects/variations, cannula surface finish, inner diameter variations alone the length of the cannula, outer diameter variations along the length of the cannula, inner to outer diameter concentricity, variations in wall thickness along the length of the cannula, tooling inaccuracies/tolerances, debris on cannula and/or tooling, and tooling alignment.

FIG.1

FIG.2

EP 4 201 545 A1

FIG.3

FIG.4

FIG.5

EP 4 201 545 A1

FIG.6C

FIG.6B

FIG.6A

FIG.7

EP 4 201 545 A1

FIG.8

91 — Receive desired set parameters $z_{sp}$

90

92 — Determine uncontrolled inputs $u_d$

93 — Input $z_{sp}$, $u_d$ and $y_{k-1}$ into the ML model

94 — Determine control parameters $u_k$ using output from ML model

95 — Set part-processing device using control parameters $u_k$ and uncontrolled inputs $u_d$

96 — Bend cannula using part-processing device

97 — Determine bend parameters $y_k$ of the bent cannula

98 — Crop (i.e., define subset of) bend parameters $y_k$ of the bent cannula to determine inspection parameters $z_k$

99 — Inspect bent cannula using inspection parameters $z_k$

FIG.9

Europäisches
Patentamt

European
Patent Office

Office européen
des brevets

# EUROPEAN SEARCH REPORT

**Application Number**

EP 22 21 6154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/401119 A1 (PUTMAN MATTHEW C [US] ET AL) 24 December 2020 (2020-12-24) * the whole document * ----- | 1-15 | INV. B21D7/12 G05B19/418 G05B13/02 |
| A | WO 2020/106725 A1 (RELATIVITY SPACE INC [US]) 28 May 2020 (2020-05-28) * the whole document * ----- | 1-15 | |
| A | US 2018/292808 A1 (IKAI SATOSHI [JP] ET AL) 11 October 2018 (2018-10-11) * the whole document * ----- | 1-15 | |

| | | | TECHNICAL FIELDS SEARCHED (IPC) |
|---|---|---|---|
| | | | G05B B21D |

The present search report has been drawn up for all claims

| Place of search | Date of completion of the search | Examiner |
|---|---|---|
| The Hague | 1 May 2023 | Sollazzo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6154

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2023

| Patent document cited in search report | | Publication date | Patent family member(s) | | Publication date |
|---|---|---|---|---|---|
| US 2020401119 | A1 | 24-12-2020 | CN | 113994286 A | 28-01-2022 |
| | | | EP | 3948458 A1 | 09-02-2022 |
| | | | JP | 2022537811 A | 30-08-2022 |
| | | | KR | 20220005077 A | 12-01-2022 |
| | | | TW | 202115510 A | 16-04-2021 |
| | | | US | 2020401119 A1 | 24-12-2020 |
| | | | US | 2020401120 A1 | 24-12-2020 |
| | | | US | 2021311465 A1 | 07-10-2021 |
| | | | US | 2021318674 A1 | 14-10-2021 |
| | | | WO | 2020263783 A1 | 30-12-2020 |
| WO 2020106725 | A1 | 28-05-2020 | US | 2020166909 A1 | 28-05-2020 |
| | | | WO | 2020106725 A1 | 28-05-2020 |
| US 2018292808 | A1 | 11-10-2018 | CN | 108693834 A | 23-10-2018 |
| | | | DE | 102018205015 A1 | 11-10-2018 |
| | | | JP | 6474449 B2 | 27-02-2019 |
| | | | JP | 2018180764 A | 15-11-2018 |
| | | | US | 2018292808 A1 | 11-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014078938 A1